# EUROPEAN PATENT APPLICATION

(11) **EP 4 844 342 A1**
(43) Date of publication of application: **25.11.2026**
(21) Application number: 25209294.5
(22) Date of filing: 16.10.2025
(51) Int. Cl.: G01C 21/34

(54) **METHOD FOR CALCULATING PHYSIOLOGICAL EFFORT-BASED ROUTES**

(30) Priority: 10.09.2024 GR 20240100624; 10.01.2025 GR 20240100624
(71) Applicant: Boukouras, Efstathios, 20131 Korinthos (GR)
(72) Inventor: Boukouras, Efstathios, 20131 Korinthos (GR)
(74) Representative: Kouzelis, Dimitrios

(57) **Abstract**

A computer-implemented method for calculating physiological effort-based routes by obtaining user physiological data including at least one parameter selected from age, sex, weight, height, fitness level, and basal metabolic rate. The method retrieves metabolic equivalent of task (MET) values from a metabolic rate database (102), wherein the MET values correspond to different physical activities. The method obtains geographical and environmental data for a route including at least one parameter selected from distance, terrain slope, surface type, and weather conditions. The method calculates a metabolically equivalent distance (MED) value for the route by applying a bioenergetic cost function that combines the user physiological data, the MET values, and the geographical and environmental data. The method outputs routing information based on the calculated MED value. The disclosure also provides a computer system including a user profile module (101), a metabolic rate database (102), a terrain analysis module (103), a calculation engine (104), and an output interface (105).

## Description

The present disclosure relates to computer-implemented systems and methods for route planning and spatial analysis, and more particularly to a system that calculates routes and accessibility zones using physiological effort as the primary cost function, incorporating personalised user characteristics and environmental factors to determine metabolically equivalent distance measurements.

### BACKGROUND

Route planning and navigation systems have become ubiquitous in modern transportation, with most systems calculating optimal paths based on distance, travel time, or monetary cost. Traditional GPS navigation applications guide users along routes by minimizing these conventional metrics, providing estimates for arrival times and total distances. In the context of physically active modes of travel such as walking, cycling, swimming or combinations with motorised transport, such as public transport, these systems typically apply uniform speed assumptions or basic adjustments for terrain features like elevation changes.

Conventional routing systems typically estimate cost by time or distance, sometimes adjusted by terrain or surface, while alternative cost metrics exist for specific cases (e.g., fuel cost for motorized transport). For active modes (walking, cycling, and mixed transit), physiological (bodily) effort materially affects user choice but is largely ignored or only partially modelled. Prior systems (US20140278064A1, US20120143497A1, WO2019103735A1) focus on monitoring or designing exercise programs, can estimate energy expenditure for outdoor routes, or classify difficulty via sensors and user feedback (US20160330801A1), yet do not use personalised physiological effort as the primary cost in a predictive routing method for everyday mobility or at multi-user/multimodal scale.

Energy expenditure alone does not adequately capture the physiological effort across different user profiles-e.g., an athletic adolescent and an overweight middle-aged adult may expend similar energy but experience very different levels of effort-. In exercise science, metabolic equivalents of tasks (METs) are widely used to quantify physical activity intensity, defined as the ratio of energy used during an activity to basal or resting metabolic rate. METs are linked to energy expenditure and can be used as an intermediate step in its calculation (e.g., CN117232542A) but constitute a distinct intensity measure. Recent experimental studies confirm the validity and accuracy of MET-based estimates when adjusted for individual physiological characteristics (e.g., DOI: 10.1152/japplphysiol.00023.2004).

In summary, existing methods emphasize external parameters like distance, time, or raw energy, but fail to account for physiological effort as an individualised and scalable cost function. To date, no comprehensive system exists that integrates personalised intensity metrics into predictive routing and accessibility analysis across diverse users, scenarios, and modes. This gap limits current systems from achieving human-centered travel optimization.

The lack of standardized measures for comparing physiological effort across different individuals, transportation modes, and route characteristics presents another challenge. Without such standardization, it becomes difficult to optimize routes for multiple users and multimodal transport scenarios simultaneously or to conduct meaningful spatial accessibility analyses that account for diverse physical capabilities within a population.

It has been appreciated that a computer-implemented system is needed that overcomes one or more of these problems.

### SUMMARY

This Summary is provided to introduce a selection of concepts in a simplified form that are further described below in the Detailed Description.

In a first aspect, a computer-implemented method for calculating physiological effort-based routes is provided. The method comprises: obtaining user physiological data, or user profile including at least one parameter selected from age, sex, weight, height, fitness level, and health attributes/basal metabolic rate; retrieving Metabolic Equivalent of Task (MET) values from a metabolic rate database, wherein the MET values correspond to different physical activities; obtaining geographical and environmental data for a route including at least one parameter selected from distance, terrain slope, surface type, and weather conditions; calculating a Metabolically Equivalent Distance (MED) value for the route by applying a bioenergetic cost function that combines the user physiological data, the MET values, and the geographical and environmental data; and outputting routing information based on the calculated MED value, to guide users in space.

This approach enables personalised route planning that accounts for individual physiological differences, providing more accurate effort estimations compared to conventional distance or time-based routing systems. The MED metric allows standardized comparison of physiological effort across different users, routes, and transportation modes.

The method may further include dividing the route into multiple segments and calculating individual MED values for each segment, wherein the total MED value comprises a sum of the individual MED values.

Segmenting the route allows for more precise calculations by accounting for varying conditions along different portions of the path, improving the accuracy of effort estimations for complex routes with changing terrain or environmental factors.

The method may further include correcting the MET values based on the user's basal metabolic rate by multiplying a standard MET value by a ratio of a reference metabolic rate to the user's actual basal metabolic rate.

This correction personalises the MET values to account for individual metabolic differences, ensuring that the physiological effort calculations reflect the user's actual metabolic capacity rather than population averages.

The method may further include applying adjustment factors to the corrected MET values based on environmental conditions, wherein the adjustment factors include coefficients for at least one of slope, surface type, weather conditions, and carried load.

Environmental adjustments enhance the accuracy of effort calculations by accounting for external factors that influence the physical demands of travel, providing more realistic effort estimations under varying conditions.

The method may further include calculating a relative intensity ratio by dividing an adjusted MET value by a reference corrected MET value for a reference user and multiplying the relative intensity ratio by a physical distance to determine the MED value.

The relative intensity ratio enables standardization of effort measurements across different users, allowing meaningful comparisons and optimization of routes for multiple individuals with varying physical capabilities.

The method may further include generating accessibility zones by calculating MED values for multiple destinations from a starting point and identifying areas reachable within a specified MED threshold 'budget'.

Accessibility zone generation provides spatial analysis capabilities that reveal areas of equal physiological effort, supporting urban planning, transportation analysis, and infrastructure development decisions based on human-centered accessibility metrics.

The method may further include receiving user feedback regarding perceived exertion after route completion and adjusting future MED calculations based on the feedback.

Incorporating user feedback enables continuous improvement of the system's accuracy through machine learning approaches, allowing the calculations to better reflect individual experiences and improving personalisation over time.

In a second aspect, a computer system for calculating physiological effort-based routes is provided. The system comprises: a user profile module configured to collect and store user physiological data; a metabolic rate database containing standardized MET values and adjustment factors; a terrain analysis module configured to retrieve geographical and environmental data; a calculation engine configured to process the user physiological data, MET values, and geographical data to calculate MED values using a bioenergetic cost function; and an output interface configured to present routing information based on the calculated MED values.

This system architecture provides a comprehensive platform for physiological effort-based routing that integrates multiple data sources and processing components, enabling scalable deployment across various applications from personal navigation to urban planning analysis.

The system may further include a visualization layer configured to display calculated routes and accessibility zones on digital maps with color-coding or numerical labels indicating MED values.

Visual representation of MED data enhances user comprehension and decision-making by providing intuitive graphical displays of effort requirements, making complex physiological calculations accessible to users without technical expertise.

The system may further include an external API integration module configured to provide programmatic access to MED calculations for third-party applications.

API integration extends the system's utility by enabling incorporation into existing navigation platforms, GIS applications, and mobility services, broadening the impact of physiological effort-based routing across diverse technological ecosystems.

It is further disclosed that the present invention provides a computer-implemented method and system for calculating the "cost" of traveling a route in terms of personalized physiological effort. It obtains physiological data (from the user or external sources) necessary to determine the user's basal/resting metabolic rate, along with relevant geographical and environmental parameters. Using these inputs, the system applies a novel bioenergetic cost function to one or more segments of a route.

The cost is expressed as a new index or metric, referred to here as Metabolically Equivalent Distance (MED). This measure can be standardized against the physiological effort required for a reference user to traverse a reference route under reference conditions. Such standardization allows routes to be ranked by the minimum or preferred physiological effort across one or multiple users. It also supports the creation, execution, and visualization of spatial accessibility analyses across many individuals.

To implement the method, the invention comprises a system with the following modules: a User Profile Module for inputting and storing user physiological data, a Metabolic Rate Database of MET values and adjustment factors, a Terrain Analysis Module for obtaining spatial and environmental data, a Calculation Engine, a storage medium or memory, and an Output Interface for presenting and exporting results.

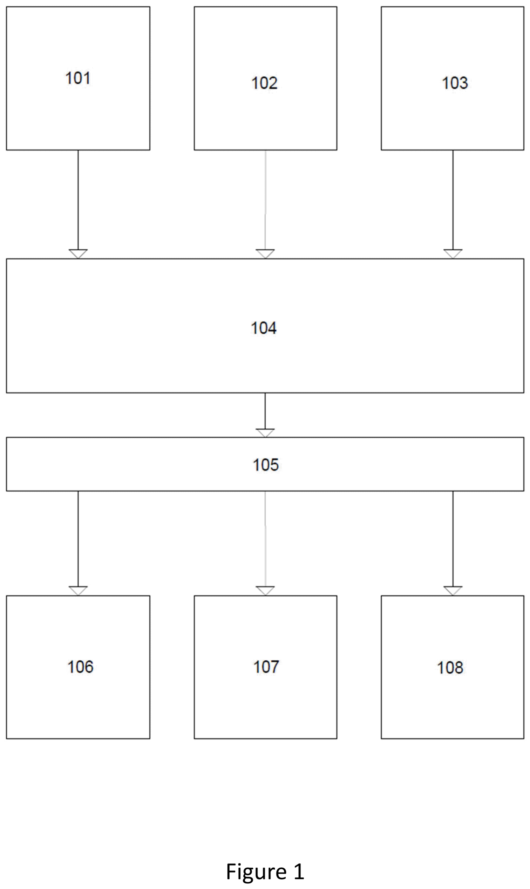

### BRIEF DESCRIPTION OF FIGURE 1

Embodiments of the invention will be described, by way of example, with reference to Figure 1, which illustrates a block diagram of a system architecture for calculating physiological effort-based routes, according to aspects of the present disclosure.

### DETAILED DESCRIPTION

Referring to Figure 1, a computer system for calculating physiological effort-based routes comprises interconnected modules that work together to process user data and generate routing information based on physiological effort. The system includes a user profile module 101, a metabolic rate database 102, a terrain analysis module 103, a calculation engine 104, and an output interface 105.

The user profile module 101 is configured to collect, manage and store user physiological data including parameters such as age, sex, weight, height, fitness level, and basal metabolic rate. The user profile module 101 provides this physiological data to the calculation engine 104 for processing.

The metabolic rate database 102 is a repository of standardized MET values corresponding to different physical activities and adjustment factors, which is enriched with empirical data and interpolates values when missing. The metabolic rate database 102 supplies these MET values to the calculation engine 104 when calculating physiological effort for various activities.

The terrain analysis module 103 is configured to retrieve geographical and environmental data including terrain slope, surface type, and weather conditions. The terrain analysis module 103 feeds this spatial and environmental information to the calculation engine 104.

The calculation engine 104 is configured to process the user physiological data from the user profile module 101, the MET values from the metabolic rate database 102, and the geographical and environmental data from the terrain analysis module 103 to calculate MED values using a bioenergetic cost function. The calculation engine 104 combines these inputs to determine the physiological effort associated with different routes.

The output interface 105 is configured to present to the user routing information based on the calculated MED values from the calculation engine 104. The output interface 105 connects to three components: a routing instructions module 106, a visualization layer 107, and an API integration module 108. The routing instructions module 106 provides personalised route suggestions with associated MED costs. The visualization layer 107 renders calculated routes and accessibility zones on digital maps. The API integration module 108 enables programmatic access for third-party systems.

The system may be implemented on various hardware setups including smartphones, wearable devices, dedicated GPS navigation units, or server-based and cloud computing platforms. For large-scale deployments handling high data volumes such as city-wide traffic or user data, the system includes specialized database servers and cloud computing resources to ensure performance and scalability.

The user profile module 101 provides a user interface for manual data entry and supports automated data collection through various integration methods. The user profile module 101 interfaces with third-party wellness systems and wearable devices such as heart rate monitors and GPS sensors for direct import of external data. This integration capability allows the user profile module 101 to automatically retrieve physiological measurements and activity data without manual user input. The user profile module 101 supports standard communication protocols including Bluetooth, ANT+, and wireless connectivity to establish connections with external devices and systems.

The user profile module 101 records historical information for each user such as usual walking or cycling speeds and receives user feedback on perceived exertion. This historical data enables the user profile module 101 to track changes in user fitness levels over time and adjust calculations accordingly. The user profile module 101 stores feedback data on a numerical scale, such as a 1 to 10 rating system that corresponds to perceived effort levels.

The user profile module 101 implements security protocols and anonymization techniques for personal data protection according to applicable specifications. Data encryption methods protect stored physiological information, and access controls limit data retrieval to authorized system components. The user profile module 101 applies anonymization techniques when aggregating data across multiple users to prevent identification of individual users while maintaining statistical utility for system improvements.

The user profile module 101 includes an advanced settings subsystem that allows input of additional parameters such as medical conditions, body fat percentage, and carried load expressed in kilograms. The advanced settings subsystem provides options for selecting different bioenergetic equation models based on specific user characteristics or preferences. The user profile module 101 validates input data ranges to ensure physiological parameters fall within acceptable limits for accurate calculations.

The metabolic rate database 102 generates estimates through standard interpolation functions such as splines between known values when specific bibliographic values are missing. When MET values for intermediate activity intensities are not available in the scientific literature, the metabolic rate database 102 applies interpolation algorithms to calculate estimated values based on surrounding data points. The metabolic rate database 102 uses spline interpolation methods to create smooth transitions between known MET values for activities with similar characteristics but different intensities.

The metabolic rate database 102 can be enriched with empirical data from field studies such as ergospirometry that feed values into the standardized lists. Empirical data collection through direct physiological measurement provides additional MET values that supplement literature-based data sources. The metabolic rate database 102 incorporates field study results to improve accuracy and expand coverage of MET values for specialized activities or conditions not well-represented in standard reference materials.

The metabolic rate database 102 includes adjustment factors for environmental and contextual conditions that modify baseline MET values. The adjustment factors include coefficients for slope gradients, surface types, weather conditions, and carried load parameters. The metabolic rate database 102 stores slope adjustment coefficients that account for increased physiological effort when traversing inclined terrain. Surface type adjustment factors modify MET values based on ground conditions such as asphalt, gravel, dirt, or grass surfaces that affect locomotion efficiency.

The terrain analysis module 103 is configured to retrieve geographical and environmental data for routes including terrain slopes, surface types, and weather conditions. The terrain analysis module 103 interfaces with external data sources through application programming interfaces (APIs) to obtain spatial and environmental information used in physiological effort calculations.

The terrain analysis module 103 retrieves digital elevation models (DEMs) to calculate terrain slope values for route segments. The terrain analysis module 103 processes elevation data to determine gradient changes along routes, providing slope information as a percentage or absolute value or in terms of degrees.

The terrain analysis module 103 accesses elevation databases through APIs that provide topographical data at various resolutions depending on the geographic area and data availability. The surface type classifications and topographical data are obtained from mapping services such as Google Maps or OpenStreetMap. Surface data include categories such as asphalt, concrete, gravel, dirt, grass, and other ground surface materials that affect locomotion effort. The terrain analysis module 103 processes surface type information to provide adjustment factors for MET calculations based on the physical characteristics of different walking or cycling surfaces.

The terrain analysis module 103 incorporates real-time meteorological data including temperature, wind speed and direction, sun and precipitation intensity from weather data providers. The terrain analysis module 103 connects to meteorological APIs to retrieve current weather conditions and forecasts for route locations. Temperature data affect physiological effort calculations by accounting for thermal stress on the human body during physical activity. Wind speed and direction data enable the terrain analysis module 103 to calculate headwind or tailwind effects on cycling or walking effort. Precipitation intensity data allows the terrain analysis module 103 to adjust surface conditions and visibility factors that influence travel difficulty.

The terrain analysis module 103 processes and formats the retrieved geographical and environmental data into standardized parameters for use by the calculation engine 104. The terrain analysis module 103 applies data validation procedures to ensure accuracy and completeness of environmental parameters. When specific data points are unavailable, the terrain analysis module 103 uses interpolation methods or default values based on regional characteristics, or historical data to maintain calculation continuity.

The terrain analysis module 103 supports real-time data updates to reflect changing environmental conditions during route calculation and navigation. The terrain analysis module 103 monitors data freshness and automatically requests updated information when environmental conditions change significantly. The terrain analysis module 103 caches frequently accessed geographical data to reduce API call frequency while maintaining data accuracy for repeated route calculations in the same geographic areas.

The calculation engine 104 processes user physiological data from the user profile module 101, MET values from the metabolic rate database 102, and geographical and environmental data from the terrain analysis module 103 to calculate Metabolic Equivalent Distance (MED) values using a bioenergetic cost function. The bioenergetic cost function processes basal metabolic rate data, fitness factors, and activity-specific MET values to establish baseline physiological effort measurements. The calculation engine 104 modifies these baseline measurements using environmental adjustment factors including terrain slope coefficients, surface type multipliers, weather condition modifiers, and carried load parameters. The calculation engine 104 applies computational algorithms that combine these multiple data inputs to determine physiological effort measurements for route planning and analysis.

The calculation engine 104 divides a route into a plurality of segments using minimum units such as segments of 50 meters, or even of 10 meters, based on terrain analysis calculations. Route segmentation enables the calculation engine 104 to account for varying environmental conditions and terrain characteristics along different portions of a route. The calculation engine 104 determines segment boundaries based on changes in slope, surface type, weather conditions, or transportation mode to maintain calculation accuracy across diverse route conditions, to determine the physiological effort associated with traversing each individual segment.

The calculation engine 104 calculates individual MED values for each segment of the plurality of segments using the bioenergetic cost function applied to segment-specific parameters. Each segment receives individual processing where the calculation engine 104 applies relevant MET values, user physiological adjustments, and environmental factors specific to that segment's characteristics.

The calculation engine 104 determines that the MED value for the route comprises a sum of the individual MED values calculated for each segment. This summation approach allows the calculation engine 104 to account for cumulative physiological effort across routes with varying terrain and environmental conditions.

The calculation engine 104 supports standard routing algorithms including Dijkstra, A-star, and Floyd-Warshall algorithms for generating routing instructions. These routing algorithms enable the calculation engine 104 to identify optimal paths based on MED values as cost functions rather than traditional distance or time metrics. The calculation engine 104 implements Dijkstra algorithm for single-source shortest path calculations using MED values as edge weights. The calculation engine 104 applies A-star algorithm for heuristic-based pathfinding that incorporates estimated MED costs to destination points. The calculation engine 104 utilizes Floyd-Warshall algorithm for all-pairs shortest path calculations when analysing multiple route options simultaneously.

The calculation engine 104 processes route optimization requests by evaluating multiple path alternatives and selecting routes that minimize total MED values or meet specified physiological effort criteria. The calculation engine 104 generates routing instructions based on calculated MED values and provides alternative route options with associated physiological effort. The calculation engine 104 supports dynamic recalculation capabilities that update MED values and routing recommendations when environmental conditions or user parameters change during route execution.

The metabolic rate database 102 contains standardized MET values corresponding to different physical activities including walking at various speeds, cycling, running, and stationary activities such as standing or sitting. The metabolic rate database 102 stores MET values derived from scientific literature sources that provide systematically coded metabolic equivalents for hundreds of physical activities. The metabolic rate database 102 includes MET values ranging from complete inactivity and passive transportation to high-intensity activities such as running and stair climbing.

The calculation engine 104 corrects MET values based on a user's basal metabolic rate by multiplying a standard MET value by a ratio of a reference metabolic rate to the user's actual basal metabolic rate. The correction process accounts for individual differences in resting metabolism that affect the relationship between activity intensity and physiological effort. The calculation engine 104 applies the correction formula: $Corrected MET = Standard MET \times \left(3.5/BMR_individual\right) ,$ where 3.5 ml O₂/kg/min represents the reference resting metabolic rate and BMR_individual represents the user's actual basal metabolic rate, expressed as a resting O2 consumption.

The calculation engine 104 applies adjustment factors to the corrected MET values based on environmental conditions, wherein the adjustment factors include coefficients for at least one of slope, surface type, weather conditions, and carried load. The adjustment factors modify corrected MET values to account for external conditions that increase or decrease physiological effort beyond baseline activity requirements.

The calculation engine 104 applies slope coefficients that increase MET values for uphill travel and may decrease MET values for downhill travel depending on the gradient magnitude.

The calculation engine 104 applies surface type coefficients that modify MET values based on ground conditions affecting locomotion efficiency. Soft surfaces such as sand or loose gravel receive higher adjustment coefficients that increase MET values, while smooth surfaces such as asphalt receive lower coefficients.

The calculation engine 104 also applies weather condition coefficients that account for environmental factors such as headwinds, extreme temperatures, or precipitation that affect physiological effort during outdoor activities.

The calculation engine 104 applies carried load coefficients that increase MET values when users transport additional weight during travel. The carried load adjustment factors scale proportionally with the additional weight carried, expressed in kilograms, to account for increased physiological effort associated with load bearing during locomotion activities.

The calculation engine 104 applies a fitness factor to adjust the MET values based on individual conditioning differences including at least one of cardiovascular fitness, body composition, and overall physical conditioning. The fitness factor provides personalised adjustment of MET values to account for individual variations in physical conditioning that affect physiological effort for identical activities. The calculation engine 104 determines fitness factors based on user profile data including fitness level assessments, body composition measurements, and historical performance data.

The calculation engine 104 calculates fitness factors from user feedback regarding perceived exertion during completed activities. Users provide subjective effort ratings on a numerical scale, and the calculation engine 104 compares these ratings to calculated MET values to derive personalised fitness adjustment factors. The calculation engine 104 updates fitness factors over time as user conditioning changes through regular physical activity or changes in health status.

The calculation engine 104 applies the fitness factor by multiplying corrected MET values by the fitness coefficient to produce fitness-adjusted MET values. The fitness factor modification occurs after basal metabolic rate correction but before environmental adjustment factor application. The calculation engine 104 uses the formula: $Adjusted MET _ F = Corrected MET \times F ,$ where F represents the fitness factor derived from user conditioning assessments.

The calculation engine 104 combines fitness-adjusted MET values with environmental adjustment factors to produce final adjusted MET values for physiological effort calculations. The calculation engine 104 applies the formula: $Adjusted MET = Adjusted MET _ F \times \left(1+K_slope+K_surface+K_weather+K_load\right) ,$ where K coefficients represent adjustment factors for slope, surface type, weather conditions, and carried load respectively.

The calculation engine 104 calculates a relative intensity ratio by dividing an adjusted MET value by a reference corrected MET value for a reference user. The relative intensity ratio provides a dimensionless measure that normalizes physiological effort across different users and activities. The calculation engine 104 determines the reference corrected MET value using standardized reference user characteristics including age, weight, height, and fitness level parameters.

The calculation engine 104 applies the formula: $R = Adjusted MET / Reference Corrected MET$ where R represents the relative intensity ratio that quantifies the user's physiological effort relative to the reference scenario. The relative intensity ratio enables comparison of physiological effort across different users, activities, and environmental conditions using a standardized measurement scale.

The calculation engine 104 multiplies the relative intensity ratio by a physical distance to determine the MED value for route segments or complete routes. The multiplication process converts the dimensionless relative intensity ratio into a distance-based measurement that represents physiological effort in terms of equivalent distance units. The calculation engine 104 applies the formula: $MED _ segment = R \times distance _ segment$ where distance_segment represents the physical distance of the route segment being analysed.

The calculation engine 104 handles segments without physical distance such as waiting at bus stops by translating effort into equivalent distance using a reference distance per minute. The calculation engine 104 uses a reference distance of 80 meters per minute corresponding to walking about 4.8 km/h as a baseline pace for time-based segments. For stationary activities, the calculation engine 104 applies the formula: $MED _ segment = R \times \left(D_ref\times time_minutes\right)$ where D_ref represents the reference/calibration distance the reference user covers per minute at baseline and time_minutes represents the duration of the segment in minutes.

The output interface 105 is configured to present routing information based on calculated MED values from the calculation engine 104. The output interface 105 processes MED calculations and formats the results for display through multiple presentation methods including numerical displays, graphical visualizations, and data export capabilities.

The output interface 105 outputs routing information based on the calculated MED value by presenting route recommendations with associated physiological effort measurements. The output interface 105 displays MED values as numerical labels that indicate the total physiological effort associated with specific routes or route segments. The output interface 105 presents routing information in standardized units such as MEDmeters that enable users to compare physiological effort across different route options.

The output interface 105 generates accessibility zones by calculating MED values for a plurality of destinations from a starting point. The accessibility zone generation process involves the output interface 105 processing MED calculations for multiple destination points to determine reachable areas within specified physiological effort limits. The output interface 105 coordinates with the calculation engine 104 to perform MED calculations across geographic grids or point networks to establish accessibility boundaries.

The output interface 105 identifies areas reachable within a specified MED threshold by comparing calculated MED values to user-defined physiological effort limits. The output interface 105 processes MED calculations for destination points and classifies locations as accessible or inaccessible based on whether the calculated MED values fall below the specified threshold. The output interface 105 generates accessibility zone boundaries by connecting points with equivalent MED values to create contour lines that delineate areas of equal physiological effort.

The output interface 105 generates a visualization of the routing information on a digital map with color-coding or numerical labels indicating the MED value. The visualization capabilities enable the output interface 105 to present routing information through graphical displays that communicate physiological effort information through visual elements. The output interface 105 applies color-coding schemes that assign different colors to routes or areas based on MED value ranges, with color intensity or hue variations representing different levels of physiological effort.

The output interface 105 displays numerical labels on digital maps that show specific MED values for routes, route segments, or geographic areas. The numerical labelling system enables the output interface 105 to provide precise physiological effort measurements alongside visual representations. The output interface 105 positions numerical labels at appropriate locations on digital maps to avoid visual clutter while maintaining readability of MED value information.

The output interface 105 displays isopleths of accessibility as polygons or colour gradients creating heat maps and choropleth maps when analysing sets of points of interest. Isopleths represent lines or areas of equal physiological effort that enable visualization of accessibility patterns across geographic regions. The output interface 105 generates polygon representations of accessibility zones by connecting points with equivalent MED values to create closed boundary shapes that define reachable areas.

The output interface 105 creates heat maps by applying colour gradients that represent physiological effort intensity across geographic areas. Heat map visualizations enable the output interface 105 to display continuous variations in accessibility levels using colour transitions that range from low-effort areas to high-effort areas. The output interface 105 generates choropleth maps by applying discrete colour classifications to geographic regions based on MED value ranges or accessibility categories.

The output interface 105 processes sets of points of interest by calculating MED values for multiple destination locations and generating comparative visualizations. The output interface 105 analyses accessibility patterns for point collections such as public facilities, commercial locations, or transportation nodes to identify areas with varying levels of physiological effort accessibility. The output interface 105 displays comparative accessibility information through color-coded or heatmaps that highlight differences in physiological effort across multiple destinations.

The output interface 105 provides local and web interfaces for data presentation and user interaction. Local interfaces enable the output interface 105 to present routing information through applications installed on user devices such as smartphones, tablets, or desktop computers. The output interface 105 supports local interface functionality including touchscreen interactions, menu navigation, and data input capabilities for route planning and accessibility analysis.

The output interface 105 provides web interfaces that enable access to routing information through internet browsers without requiring local software installation. Web interface capabilities allow the output interface 105 to serve routing information and visualization tools through web servers that users access through standard web browsers. The output interface 105 supports web interface functionality including interactive map displays, form-based input methods, and real-time data updates for route calculations and accessibility analysis.

The output interface 105 supports data export in common file formats such as CSV, GeoJSON, and Shapefile for integration with external analysis tools. Data export capabilities enable the output interface 105 to generate files containing MED calculations, route information, and accessibility data in standardized formats that external software applications can process. The output interface 105 exports CSV files containing tabular data with MED values, route coordinates, and associated metadata for spreadsheet analysis or database import. The output interface 105 creates Shapefile exports that provide compatibility with traditional GIS software applications for advanced spatial analysis and cartographic production. The output interface 105 supports batch export operations that enable users to export multiple routes, accessibility analyses, or geographic datasets simultaneously for comprehensive analysis workflows.

The system processes multimodal travel segments that include at least two different transportation modes selected, like from walking, cycling,swimming and motorised transport. Multimodal travel processing enables the system to calculate MED values for routes that combine multiple transportation methods within a single journey. The system analyses each transportation mode segment separately and applies appropriate MET values and adjustment factors specific to each mode of travel.

The system handles multimodal route segments by identifying transition points where users change from one transportation mode to another. Transportation mode transitions occur at locations such as bus stops, train stations, or bicycle parking areas where users switch between active travel modes and passive transport methods. The system processes each segment between transition points using MET values and environmental factors appropriate for the specific transportation mode used in that segment.

The system applies different MET values for walking segments, cycling segments, swimming segments and motorised transport segments within multimodal routes. Walking segments receive MET values based on walking speed, terrain conditions, and environmental factors that affect pedestrian travel. Cycling segments use MET values corresponding to cycling speeds and terrain characteristics that influence bicycle travel effort. Swimming segments use MET values corresponding to swimming speeds and water characteristics that influence swimming effort, such as water temperature, direction of wind, height and direction of waves, composition of water etc. Motorised transport segments apply MET values for passive activities such as sitting or standing during vehicle travel. Motorised travel can be the use of a private vehicle or a public transport, on a road or on water.

The system handles segments without physical distance such as waiting at bus stops by translating effort into equivalent distance using a reference distance per minute. Stationary activities during multimodal travel include waiting periods at transit stops, standing in vehicles, or sitting during passive transport segments. The system assigns MET values to these stationary activities based on the physical demands of the specific activity being performed.

The system uses a reference distance of 80 meters per minute corresponding to walking about 4.8 km/h as a baseline pace for time-based segments. The reference distance provides a standardized conversion factor that enables the system to express stationary activity effort in distance-equivalent units. The system calculates MED values for time-based segments by multiplying the relative intensity ratio by the reference distance per minute and the duration of the stationary activity.

The system applies the formula $MED _ segment = R \times \left(D_ref\times time-minutes\right)$ for segments involving stationary activities, where R represents the relative intensity ratio, D_ref represents the reference distance of 80 meters per minute, and time-minutes represents the duration of the activity. This calculation method enables the system to incorporate physiological effort from stationary activities into total route MED calculations alongside active travel segments.

The system performs real-time recalculation of MED values based on changing parameters including at least one of travel speed, transportation mode, and prevailing weather conditions. Real-time recalculation capabilities enable the system to update MED values when conditions change during route execution or when users modify travel parameters. The system monitors parameter changes and triggers recalculation processes when significant variations occur that affect physiological effort calculations.

The system recalculates MED values when travel speed changes occur during route execution. Speed variations affect MET values for active transportation modes such as walking and cycling, where faster speeds typically correspond to higher physiological effort levels. The system updates MET values based on current speed measurements and recalculates route segment MED values to reflect changed physiological effort requirements.

The system performs MED recalculation when transportation mode changes occur during multimodal travel. Mode changes trigger the system to apply different MET values and adjustment factors appropriate for the new transportation method. The system processes transportation mode transitions by calculating MED values for completed segments using previous mode parameters and applying new mode parameters for remaining route segments.

The system updates MED calculations when prevailing weather conditions change during route execution. Weather condition changes affect environmental adjustment factors that modify MET values for outdoor activities. The system retrieves updated weather data and applies revised adjustment coefficients for temperature, wind conditions, and precipitation that influence physiological effort during active travel segments.

The system optimizes pickup locations for a plurality of users by calculating aggregate MED costs for each potential location and selecting a location that minimizes total physiological effort across the plurality of users. Multi-user optimization enables the system to balance physiological effort requirements across multiple individuals when determining shared transportation access points. The system evaluates potential pickup locations by calculating individual MED costs for each user traveling from their origin to each candidate location.

The system calculates aggregate MED costs by summing individual MED values for all users traveling to each potential pickup location. Aggregate cost calculation enables the system to quantify total physiological effort across the user group for each location option. The system processes individual user characteristics, origin locations, and environmental conditions to determine personalised MED values for each user-location combination.

The system selects pickup locations that minimize total physiological effort across the plurality of users by comparing aggregate MED costs for all candidate locations. Location selection involves the system identifying the pickup point with the lowest total MED value when considering all users in the optimization scenario. The system balances individual user effort requirements to avoid disproportionate physiological burden on any single user while minimizing overall group effort.

The system processes multi-user optimization scenarios by considering individual physiological characteristics, fitness levels, and environmental factors for each user in the group. User-specific processing enables the system to account for differences in age, fitness, mobility limitations, and other factors that affect individual physiological effort calculations. The system applies personalised MET adjustments and environmental factors for each user when calculating individual contributions to aggregate MED costs.

The system supports dynamic optimization scenarios where user locations, group composition, or environmental conditions change during the optimization process. Dynamic optimization capabilities enable the system to recalculate pickup locations when parameters change that affect MED calculations or user requirements. The system updates aggregate MED calculations and location selections to maintain optimal physiological effort distribution across the user group.

The system includes a feedback mechanism where users record subjective assessment of perceived effort on a scale of 1 to 10 simulating the Borg scale for continuous improvement. The feedback mechanism enables users to provide post-route evaluations that compare actual physiological effort experienced during route completion with calculated MED predictions. The feedback mechanism collects user input through a rating interface that presents a numerical scale corresponding to perceived exertion levels.

The system receives user feedback regarding perceived exertion after route completion through a user interface that displays a rating scale for effort assessment. The user interface presents a numerical scale ranging from 1 to 10 where users select a rating that corresponds to their subjective experience of physiological effort during the completed route. The system captures user feedback data and associates the ratings with specific routes, environmental conditions, and user physiological parameters that were active during the route execution.

The feedback mechanism implements a rating system that simulates the Borg scale for perceived exertion measurement. The Borg scale provides a standardized method for quantifying subjective effort perception that correlates with physiological measures of exercise intensity. The system adapts Borg scale principles by presenting users with a 1 to 10 rating scale where lower numbers represent minimal perceived effort and higher numbers represent maximum perceived effort.

The system presents feedback rating options through a user interface that displays descriptive labels alongside numerical ratings to guide user selection. The rating interface includes descriptive text that helps users understand the meaning of different numerical ratings in terms of perceived physical effort. The system provides rating descriptions that range from "very light effort" for low numerical ratings to "maximum effort" for high numerical ratings to ensure consistent user interpretation of the rating scale.

The system stores user feedback data in association with route characteristics, environmental conditions, and calculated MED values to enable comparative analysis. Feedback data storage includes user ratings, route identifiers, completion timestamps, weather conditions, and user physiological parameters that were used for MED calculations. The system maintains feedback data records that enable analysis of relationships between calculated MED values and user-reported perceived exertion levels.

The system adjusts future MED calculations based on the user feedback by analysing discrepancies between calculated MED values and user-reported perceived exertion ratings. The adjustment process involves the system comparing predicted physiological effort levels with actual user experience to identify patterns of over-estimation or under-estimation in MED calculations. The system processes feedback data to determine correction factors that improve accuracy of future MED predictions for individual users.

The system calculates fitness adjustment factors from user feedback data by analysing the relationship between calculated MED values and perceived exertion ratings across multiple completed routes. Fitness factor calculation involves the system determining whether users consistently report higher or lower perceived effort compared to calculated MED predictions. The system derives personalised fitness coefficients that modify MET values to better align calculated physiological effort with user-reported experience levels.

The system applies feedback-derived adjustment factors to future MED calculations by modifying fitness factors used in the bioenergetic cost function. Adjustment factor application enables the system to personalise MED calculations based on individual user response patterns identified through feedback analysis. The system updates fitness factors in user profiles to reflect feedback-based corrections that improve prediction accuracy for subsequent route calculations.

The system processes feedback data to identify systematic biases in MED calculations that affect accuracy across multiple users or route types. Bias identification involves the system analysing aggregated feedback data to detect patterns where calculated MED values consistently over-estimate or under-estimate perceived effort for specific conditions. The system uses bias analysis results to refine adjustment factors, MET values, or environmental coefficients that improve overall calculation accuracy.

The system implements continuous improvement capabilities by regularly updating calculation parameters based on accumulated feedback data from multiple users and routes. Continuous improvement processing involves the system analysing feedback trends over time to identify opportunities for enhancing MED calculation accuracy. The system applies statistical analysis methods to feedback data to determine optimal adjustment factors and parameter modifications that improve system performance.

The system validates feedback-based improvements by comparing updated MED calculations with subsequent user feedback to measure accuracy improvements. Validation processing involves the system tracking prediction accuracy metrics before and after implementing feedback-derived adjustments. The system measures improvement effectiveness by analysing reduction in discrepancies between calculated MED values and user-reported perceived exertion levels following parameter updates.

A computer program comprises instructions which, when executed by a computer, cause the computer to carry out the method for calculating physiological effort-based routes. The computer program includes executable code that implements the computational processes for obtaining user physiological data, retrieving MET values, obtaining geographical and environmental data, calculating MED values using bioenergetic cost functions, and outputting routing information based on calculated MED values.

The computer program contains software modules that execute the physiological effort calculation algorithms on computing devices. The computer program includes instructions for data collection processes that obtain user physiological parameters including age, sex, weight, height, fitness level, and basal metabolic rate from user input interfaces or external data sources. The computer program implements data retrieval functions that access metabolic rate databases to obtain MET values corresponding to different physical activities.

The computer program includes instructions for geographical data processing that obtain terrain slope, surface type, and weather condition information from external APIs and data sources. The computer program implements bioenergetic cost function algorithms that combine user physiological data with MET values and environmental parameters to calculate MED values for route segments and complete routes. The computer program contains routing algorithms that process MED calculations to generate routing recommendations and accessibility analyses.

The computer program executes route segmentation processes that divide routes into segments and calculate individual MED values for each segment. The computer program implements MET correction algorithms that adjust standard MET values based on user basal metabolic rate and apply environmental adjustment factors for slope, surface type, weather conditions, and carried load. The computer program contains relative intensity ratio calculations that normalize physiological effort measurements across different users and activities.

The computer program includes instructions for multimodal travel processing that handle route segments with different transportation modes including walking, cycling, swimming and motorised transport. The computer program implements real-time recalculation capabilities that update MED values when travel parameters change during route execution. The computer program contains multi-user optimization algorithms that calculate aggregate MED costs for multiple users and select locations that minimize total physiological effort.

The computer program implements user feedback processing that receives perceived exertion ratings and adjusts future MED calculations based on user-reported effort levels. The computer program contains visualization generation functions that create digital map displays with color-coding and numerical labels indicating MED values. The computer program includes accessibility zone generation algorithms that calculate MED values for multiple destinations and identify areas reachable within specified effort thresholds.

The computer program supports data export functionality that generates files in formats including CSV, GeoJSON, and Shapefile for integration with external analysis tools. The computer program implements API interfaces that enable third-party systems to access physiological effort calculation capabilities. The computer program contains security protocols that protect user physiological data through encryption and anonymization techniques.

A computer-readable medium comprises instructions which, when executed by a computer, cause the computer to carry out the method for calculating physiological effort-based routes. The computer-readable medium stores executable instructions that implement the computational processes for physiological effort-based route calculation and analysis. The computer-readable medium contains program code that enables computing devices to perform MED calculations and generate routing recommendations based on physiological effort measurements.

The computer-readable medium includes storage for software instructions that execute user data collection, MET value retrieval, environmental data processing, and bioenergetic cost function calculations. The computer-readable medium stores program modules that implement route segmentation, MED calculation algorithms, and routing optimization processes. The computer-readable medium contains executable code for multimodal travel analysis, real-time recalculation capabilities, and multi-user optimization functions.

The computer-readable medium stores instructions for user feedback processing, visualization generation, and accessibility zone analysis. The computer-readable medium includes program code for data export functionality and API interface implementation that enables integration with external systems. The computer-readable medium contains software modules for security protocol implementation and user data protection measures.

The computer-readable medium may comprise various storage technologies including magnetic storage devices, optical storage devices, solid-state storage devices, or volatile memory systems. The computer-readable medium stores program instructions in formats compatible with different computing platforms including desktop computers, mobile devices, servers, and cloud computing environments. The computer-readable medium enables distribution and installation of physiological effort calculation software across different hardware configurations and operating systems.

The computer-readable medium supports software deployment through various distribution methods including physical media distribution, network downloads, cloud-based software delivery, and application store distribution platforms. The computer-readable medium contains version control information and update mechanisms that enable software maintenance and feature enhancement over time. The computer-readable medium includes installation instructions and configuration data that enable proper software setup on target computing systems.

The computer-readable medium stores software libraries and dependencies that support physiological effort calculation functionality including mathematical computation libraries, geographical data processing libraries, and user interface frameworks. The computer-readable medium contains documentation and help files that provide guidance for software installation, configuration, and operation. The computer-readable medium includes licensing information and usage terms that govern software distribution and deployment.

A computer-implemented method for calculating physiological effort-based routes provides a comprehensive approach to route planning that accounts for individual physiological characteristics and environmental factors. The method processes user-specific data, environmental conditions, and standardized metabolic measurements to generate routing recommendations based on physiological effort rather than traditional distance or time metrics.

The method begins with data collection processes that obtain user physiological data including parameters such as age, sex, weight, height, fitness level, and basal metabolic rate. The data collection process captures individual characteristics that influence physiological effort during physical activities. The method supports manual data entry through user interfaces and automated data collection through integration with external devices and systems.

The method retrieves metabolic equivalent of task (MET) values from a metabolic rate database, wherein the MET values correspond to different physical activities. MET values provide standardized measurements of activity intensity that quantify the metabolic rate during specific activities relative to resting metabolic rate. The method accesses MET values for various activities including walking at different speeds, cycling, running, and stationary activities such as standing or sitting.

The method obtains geographical and environmental data for routes including parameters such as terrain slope, surface type, and weather conditions. Geographical data collection involves accessing digital elevation models to determine terrain gradients, surface type classifications from mapping services, and real-time meteorological data from weather providers. The method processes environmental parameters that affect physiological effort during outdoor activities.

The method calculates a metabolically equivalent distance (MED) value for routes by applying a bioenergetic cost function that combines the user physiological data, the MET values, and the geographical and environmental data. The bioenergetic cost function integrates multiple data inputs to produce physiological effort measurements expressed in distance-equivalent units. The MED calculation process accounts for individual differences in metabolism, fitness, and environmental conditions that influence physical activity intensity.

The method applies correction processes to MET values based on individual basal metabolic rate to account for personal variations in resting metabolism. The correction process multiplies standard MET values by ratios that normalize metabolic measurements relative to individual baseline metabolic rates. The method applies fitness factors that adjust MET values based on individual conditioning differences including cardiovascular fitness, body composition, and overall physical conditioning.

The method applies environmental adjustment factors to corrected MET values based on terrain and weather conditions. Environmental adjustments include coefficients for slope gradients, surface types, weather conditions, and carried load parameters that modify baseline physiological effort measurements. The method processes environmental factors that increase or decrease physical activity intensity beyond standard activity requirements.

The method calculates relative intensity ratios by dividing adjusted MET values by reference corrected MET values for standardized reference users. Relative intensity ratios provide dimensionless measurements that normalize physiological effort across different users and activities. The method multiplies relative intensity ratios by physical distances to determine MED values that represent physiological effort in distance-equivalent units.

The method processes route segmentation by dividing routes into segments and calculating individual MED values for each segment. Route segmentation enables the method to account for varying environmental conditions and terrain characteristics along different portions of routes. The method sums individual segment MED values to determine total route physiological effort measurements.

The method handles multimodal travel scenarios that include different transportation modes such as walking, cycling, swimming and motorised transport within single journeys. Multimodal processing involves applying appropriate MET values and adjustment factors for each transportation mode segment. The method processes stationary activities during multimodal travel by translating effort into equivalent distance measurements using reference distance calculations.

The method supports real-time recalculation capabilities that update MED values when travel parameters change during route execution. Real-time processing involves monitoring parameter changes including travel speed, transportation mode, and weather conditions that affect physiological effort calculations. The method triggers recalculation processes when significant variations occur that impact MED value accuracy.

The method processes multi-user optimization scenarios by calculating aggregate MED costs for multiple users and selecting locations that minimize total physiological effort across user groups. Multi-user processing involves evaluating individual user characteristics and calculating personalised MED values for each user in optimization scenarios. The method balances individual effort requirements to avoid disproportionate physiological burden on any single user.

The method incorporates feedback mechanisms that receive user-reported perceived exertion ratings and adjust future MED calculations based on user experience data. Feedback processing involves comparing calculated MED values with user-reported effort levels to identify accuracy improvements. The method derives personalised adjustment factors from feedback analysis that enhance prediction accuracy for individual users.

The method generates accessibility zone analyses by calculating MED values for multiple destinations from starting points and identifying areas reachable within specified physiological effort thresholds. Accessibility analysis involves processing MED calculations across geographic grids or point networks to establish effort-based reachability boundaries. The method creates contour lines and zone boundaries that delineate areas of equal physiological effort.

The method outputs routing information based on calculated MED values through multiple presentation formats including numerical displays, graphical visualizations, and data export capabilities. The output process presents route recommendations with associated physiological effort measurements expressed in standardized units. The method generates digital map visualizations with color-coding and numerical labels that communicate physiological effort information through visual elements.

The method supports data export functionality that generates files in standardized formats for integration with external analysis tools and systems. Data export processing creates files containing MED calculations, route information, and accessibility data in formats including CSV, GeoJSON, and Shapefile. The method enables integration with existing navigation systems, geographic information systems, and transportation planning applications through programmatic interfaces.

The systems and methods described herein may be implemented in any form of computing or electronic device. The term "computer," as used herein, encompasses any device with processing capabilities sufficient to execute instructions. This includes, but is not limited to, personal computers, servers, mobile devices, personal digital assistants, and similar devices.

Such devices may include one or more processors, such as microprocessors, controllers, or other suitable types of processors, capable of executing instructions to control the device's operation. For example, in some implementations using a system-on-a-chip architecture, the processors may include fixed-function blocks (hardware accelerators) that perform parts of the method in hardware rather than software or firmware. Platform software, such as an operating system or similar, may be installed to support the execution of application software.

The described functionality may be implemented in hardware, software, or any combination thereof. When implemented in software, the instructions or code can be stored on or transmitted via a computer-readable medium. Such media include computer-readable storage media, which may be volatile or non-volatile, removable or non-removable, and implemented using any technology for storing information such as program code, data structures, or other data. Examples include, but are not limited to, ROM, EEPROM, RAM, magnetic or optical storage, flash memory, or any other storage medium accessible by a computer. Communication media that facilitate the transfer of software, such as via coaxial cables, fiber optics, DSL, or wireless signals, may also be considered part of computer-readable media.

Alternatively, or in addition, some or all of the described functionalities may be implemented using hardware logic components. Examples include, but are not limited to, application-specific integrated circuits, system-on-a-chip systems, field-programmable gate arrays, application-specific standard products, and complex programmable logic devices. In some cases, software instructions may also be implemented in dedicated circuits, such as programmable logic arrays or digital signal processors.

The computing device may operate as a standalone system or as part of a distributed system, where tasks are performed collectively by multiple devices connected via a network. Such devices may communicate over a network connection to perform the described functionality. For instance, software may be stored on a remote computer and accessed by a local device, which may download and execute portions of the software as needed. Similarly, some instructions may be processed locally, while others may execute on remote systems or networks. In some cases, the computing device may be remote and accessible via a communication interface. Storage of program instructions may also be distributed across a network or stored in a combination of local and remote locations. For example, software may reside on a remote computer and be accessed by a local terminal, or the system may execute some software locally while other components operate on remote servers.

### User Profile Module (Fig. 1-101)

The User Profile Module (UPM) collects, stores, and manages data for each user, such as demographic data (e.g., age, gender), anthropometric measurements (e.g., weight, height), while an "advanced settings" subsystem allows the input of additional parameters such as the presence of medical conditions, the percentage of body fat, the presence of additional load (expressed in kg), or the user's fitness level. Additionally, the UPM can record historical information for each user, such as usual walking or cycling speeds, as well as receive user feedback on perceived exertion. It supports interfacing with third-party systems (e.g., "wellness" software) for the direct import of external data, as well as with wearable devices and sensors (e.g., heart rate monitors, GPS). Finally, it implements security protocols and anonymization techniques for personal data according to the applicable specifications.

### Metabolic Rate Database (MRD) (Fig. 1-102)

The Metabolic Rate Database (MRD) is a central data repository that includes standardized metabolic rate values for aerobic physical activities. The values are drawn from reliable sources in the scientific literature, such as the systematically coded metabolic equivalents (METs) described in the document DOI: 10.1016/j.jshs.2023.10.010, which contains hundreds of cases. These range from complete inactivity, driving a car, or being a passenger, to walking at various speeds and ground slopes, cycling, running, and ascending or descending stairs. In addition, the data can be enriched and drawn directly from empirical field studies (ergospirometry), which, in any case, feed the values of the above or similar lists. Furthermore, the MRD includes continuous or categorical variables (specific adjustment factors for extreme ground slopes, ambient temperature, wind conditions (speed and direction), and surface type (e.g., asphalt, gravel, dirt)) to improve accuracy where relevant data are available. In cases where there is a lack of specific bibliographic values (e.g., intermediate cycling speeds), the MRD generates estimates through standard interpolation functions between known values (e.g., splines) or resorts to predetermined reference values. Overall, the MRD provides the Calculation Engine with necessary values for the oersonalization of calculations.

### Terrain Analysis Module (TAM) (Fig. 1-103)

The Terrain Analysis Module (TAM) feeds the system with spatial and environmental data, interfacing with external sources through application programming interfaces (APIs). It retrieves digital elevation models (DEMs) for calculating slopes and classifications of surface types (e.g., from Google Maps, Google, or OpenStreetMap). Additionally, it can incorporate real-time data from meteorological data providers, such as temperature, wind speed and direction, as well as the presence and intensity of precipitation. Ultimately, the TAM provides the Calculation Engine with values for performing the calculations of a route.

### Calculation Engine (CE) (Fig. 1-104)

The Calculation Engine (CE) is the computational core of the system. Initially, the route is divided into one or more segments, taking into account changes in transportation modes or using minimum units (e.g., segments of 50 meters) based on the calculations of the TAM. For each segment, a bioenergetic function is applied that combines the user's physiological data retrieved from the UPM with the geospatial data provided by the TAM. This combination produces a MED (Metabolically Equivalent Distance) value for each segment, which can be weighed against a reference user and a reference distance for standardization purposes. Subsequently, the individual values are summed to calculate the total cost of one or more routes. Based on the cost in MED, routing instructions are generated based on standard (or other) routing algorithms (e.g., Dijkstra, A*, Floyd-Warshall). Finally, the CE supports dynamic recalculation, taking into account changing parameters such as travel speed, modes of transportation, or prevailing weather conditions, utilizing external data sources or sensors.

### Output Interface (Fig. 1-105)

The Output Interface undertakes the export and presentation of the results produced by the CE (104). It provides personalized routing instructions, which include information about the proposed route, the estimated cost of physical activity intensity, and alternative routes with their corresponding costs in MED (106). Integration with GIS technology allows for the rendering and analysis of results on digital maps (107), facilitating the comprehensible presentation and comparative analysis of routes between one or different users. The system displays the calculated estimates color-coded or with labels that numerically indicate the total MED value, expressed in MEDmeter units or other equivalent measures (e.g., MEDfeet). Additionally, it displays isopleths of accessibility, presenting outlines of equal-effort accessibility areas in the form of polygons, or with color gradients, creating heat maps or choropleth maps when analyzing sets of points of interest. Finally, the module provides local and web interfaces. Through the provision of an API (108), the invention significantly extends its functionalities, integrating them into broader ecosystems and technological solutions for routing, mapping, and spatial data processing, such as GPS navigation applications or GIS spatial analysis.

### Examples of Hardware Implementation

The system can be implemented on various hardware setups, including smartphones, wearable devices, dedicated GPS navigation units, or server-based and cloud computing platforms. In a local (device-based) implementation, the hardware includes at least one processor for running calculations, sufficient RAM, storage for data and software, and a power source (e.g. a rechargeable battery). The device also incorporates sensor interfaces such as a GPS receiver, and communication interfaces (Wi-Fi, cellular data, Bluetooth/ANT+) to access online resources and connect with external sensors. A user interface (physical buttons or touchscreen) is used for input and output. For large-scale deployments handling high data volumes (e.g., city-wide traffic or user data), specialized database servers and cloud computing resources are recommended to ensure performance and scalability.

### Exemplary Method Calculations and Standardization

In a typical implementation, calculating the Metabolically Equivalent Distance (MED) for a given route follows these steps:
1.**Extraction of Standard MET Values:** For each activity type involved (e.g., walking, cycling), retrieve a standard MET value from the MRD corresponding to a reference speed for that activity. If only raw metabolic rates are available (in ml O₂/kg/min from empirical studies), convert them to METs by dividing by the standard resting oxygen consumption (3.5 ml 0₂/kg/min ≈ 1 MET).
2.**Correction for Individual BMR:** Adjust the standard MET to account for the individual's resting metabolism (BMR). Specifically, multiply the standard MET by the ratio of 3.5 ml O₂/kg/min to the user's actual BMR (in the same units). This yields the **Corrected MET** for the user. (Similarly, compute a **Reference Corrected MET** for a reference user using the reference user's BMR.) $Corrected MET = Standard MET \times \left(3.5/BMR_individual\right)$
3. **Application of Fitness Correction Factor (F):** Optionally adjust the Corrected MET by a fitness factor F that reflects individual differences in body composition, cardiovascular fitness, and overall conditioning. This factor can be derived from the user's profile data, estimated from user feedback (e.g., perceived exertion), or set manually. The result is a fitness-adjusted MET. $Adjusted MET _ F = Corrected MET \times F$
4.**Adjustment for Environmental and Contextual Factors:** Refine the fitness-adjusted MET to account for terrain and environmental influences. Apply adjustment coefficients for each relevant factor:
   - **K_slope:** slope or gradient of the route segment
   - **K_surface:** surface type (e.g., asphalt, gravel, trail)
   - **K_weather:** meteorological conditions (e.g., headwind, temperature extremes)
   - **K_load:** additional carried load (if applicable)
   Multiply the fitness-adjusted MET by the sum of these factors (plus 1) to get the **Adjusted MET** for the segment. $Adjusted MET = Adjusted MET _ F \times \left(1+K_slope+K_surface+K_weather+K_load\right)$
5.**Relative Intensity Ratio (R):** Compute the dimensionless relative intensity ratio R as the Adjusted MET divided by the Reference Corrected MET. This ratio represents the user's effort intensity relative to the reference scenario. $R = Adjusted MET / Reference Corrected MET$
6. **MED Calculation (per Segment and Total):** For each route segment, calculate the MED contribution by multiplying R by the physical distance of that segment (in meters): $MED _ segment = R \times distance _ segment$ Sum the MED values of all segments to obtain the total MED for the entire route: $MED _ total = Σ \left(MED_segment\right)$

The resulting MED is expressed as a distance unit (e.g., in "MEDmeters"), allowing intuitive interpretation and comparison of effort across users and scenarios. On this universal scale, a route costing 500 MED-m imposes the same effort on everyone. In physical distance, this equals 500 m walking for the reference profile but ~1,500 m cycling; across profiles, it may correspond to ~300 m walking for an older obese adult or ~800 m for an athletic teenager.

**Handling Segments Without Physical Distance:** If a segment involves no actual locomotion (for example, waiting at a bus stop), the system still assigns a standard MET value from the MRD for the activity (e.g., standing, sitting). This MET is then corrected and adjusted as described in steps 2-4. Because no distance is physically covered, the effort is translated into an equivalent distance that the reference user would have covered in the same time. The system uses a reference distance per minute (D_ref) that a reference user covers at a baseline pace (for example, 80 meters per minute, corresponding to walking about 4.8 km/h). The MED for a time-based segment is then calculated as: $MED _ segment = R \times \left(D_ref\times time_minutes\right)$

Where *R* is the relative intensity ratio for the activity, *D_ref* is the calibration distance the reference user covers per minute at baseline, and *time_minutes* is the duration of the segment (in minutes). If desired, such non-locomotion segments can be omitted from the total MED calculation or accounted for separately (as a supplemental effort metric).

### ILLUSTRATIVE EXAMPLES

### Example 1: Uphill Walking

A steep uphill route of 1,000 meters is traversed on foot by an overweight middle-aged user. After applying the above steps, the system calculates a total MED of 2,000 MEDmeters. This means the actual physiological effort required for this user is equivalent to the reference user walking twice the physical distance under baseline conditions.

### Example 2: Multimodal Travel

Consider a trip composed of 200 meters of walking, 10 minutes standing while waiting, 10 minutes traveling as a passive passenger on public transport, followed by another 200 meters of walking. Each segment is assigned the appropriate Standard MET, corrected for the user's BMR and fitness factor, and adjusted for terrain and context. The MED values of the individual segments are summed to yield the total MED for the trip. This enables direct comparison between multimodal journeys and purely active ones, providing a standardized view of total effort expenditure.

### Example 3: Multi-User, Multimodal Optimization (Robotaxi Pickup Scenario)

A fleet management system aims to optimize pickup points for several users. Three passengers request rides simultaneously: one young athletic user, one middle-aged commuter, and one elderly user with limited mobility. The system calculates the MED cost for each potential pickup location by integrating walking segments for each user with vehicle routing constraints for the robotaxis. By comparing the total MED across all users, the system selects a pickup location that minimizes the aggregate physiological effort while balancing vehicle efficiency. This allows the robotaxi to serve all users fairly, ensuring that no individual is disproportionately burdened by high walking effort.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

### A FURTHER DESCRIPTION

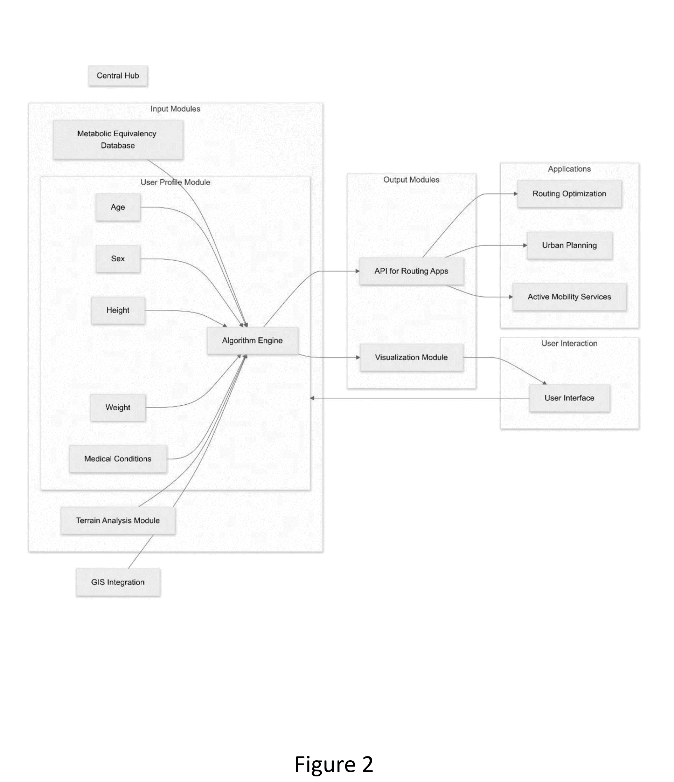

The above description can be described in the following way and is accompanied by Figure 2:

### TECHNICAL FIELD

The present disclosure pertains to the field of geospatial analysis and route optimization, specifically focusing on systems and methods that utilize physiological effort as a primary metric for calculating routes and accessibility zones of equal physical activity intensity. This innovation is particularly relevant for applications involving active modes of travel such as walking and cycling, where traditional distance and time metrics may not accurately reflect the true cost of travel for individuals with varying physiological profiles and conditions.

### BACKGROUND

Conventional geospatial analysis and route optimization systems predominantly rely on distance and time as the primary metrics to evaluate the 'cost' or difficulty of reaching a destination (1,2,3). While some advanced applications attempt to incorporate user defined (4) or energy consumption estimations, typically expressed in calories, or incorporate the difficultness of a path (5), these approaches often employ a one-size-fits-all model that fails to account for individual differences in physiological effort. This lack of personalization can lead to suboptimal route planning, particularly in sectors that depend heavily on active travel modes, such as urban planning, navigation services, and last-mile delivery operations.

To address these limitations, there is a pressing need for a system and method that integrates physiological effort as a primary metric for route cost calculation. Such a system would consider terrain, climate, and individual physiological factors, thereby producing personalized and precise route optimization and accessibility assessments. This innovation would enable the extraction of individual level analytics, facilitating more effective route planning and analysis.

### SUMMARY

The proposed system and method represent a novel approach to route optimization by integrating physiological effort as a primary metric. It takes into account geographical locations, modes of travel, travel time, and velocity, and utilizes a database of time-based metabolic equivalencies to measure physical activity intensity. These equivalencies are transformed into distance-based equivalents, adjusted for individual factors such as age, sex, and anthropometrics, through bioenergetic formulas for Resting Metabolic Rate (RMR). The system also incorporates terrain and environmental factors to refine these calculations further.

Potential applications of this tool include routing optimization for navigation apps, urban analysis and planning, and optimization of active mobility services for last-mile delivery. The core components of this system include a Metabolic Equivalency Database, User Profile Module, Terrain Analysis Module, Algorithm Engine, GIS Integration, and an API for routing applications. The functionality involves data input, route calculation, visualization, and analytics.

### DETAILED DESCRIPTION

### I. System Overview

The invention comprises a comprehensive method and system that integrates with Geographic Information Systems (GIS) and Global Positioning System (GPS) data. It leverages established metabolic equivalencies to measure the intensity of physical activity and applies corrections based on individual factors such as age, sex, anthropometrics, physical condition, and health attributes. This system is designed to provide a more accurate representation of the physiological effort involved in traversing various routes.

The system's core components include 1. A Metabolic Equivalency Database that stores comprehensive data on metabolic rates for various activities 2. A User Profile Module that collects and stores individual user data, including age, sex, weight, height, physical condition, and health attributes. 3. A Terrain Analysis Module that evaluates terrain gradient and environmental factors affecting physiological effort. 4. An Algorithm Engine that transforms metabolic equivalencies into distance-based equivalents, adjusting for individual user profiles and terrain factors. 5. GIS Integration for visualizing and analyzing spatial data.6. An API for integrating the system with existing routing and navigation applications.

### II. Core Components

### II.A. Metabolic Equivalency Database

The Metabolic Equivalency Database is a critical component that provides the foundational data for calculating physiological effort. It contains detailed information on metabolic rates for various physical activities, categorized by intensity and duration. This database allows the system to convert time-based metabolic equivalents into distance-based equivalents, which are then adjusted for individual user profiles.

### II.B. User Profile Module

The User Profile Module is responsible for collecting and storing detailed user information. This includes demographic data such as age and sex, as well as anthropometric data like weight and height.

Additionally, the module records information on the user's physical condition and health attributes, ensuring that the system can accurately tailor route calculations to individual needs.

### II.C. Terrain Analysis Module

The Terrain Analysis Module evaluates the terrain gradient and other environmental factors that can influence physiological effort. By analyzing these factors, the module provides critical data that the Algorithm Engine uses to adjust metabolic equivalencies, ensuring that route calculations reflect the true effort required to traverse different terrains.

### II.D. Algorithm Engine

The Algorithm Engine is the system's computational core, responsible for transforming metabolic equivalencies into distance-based equivalents. It uses bioenergetic formulas, such as the Harris- Benedict equation, to estimate basal metabolic rates and adjust calculations based on individual user profiles and terrain factors. This engine ensures that the system provides accurate and personalized route calculations.

### II.E. GIS Integration

GIS Integration allows the system to visualize and analyze spatial data effectively. By integrating with GIS so ware, the system can display routes and accessibility zones on electronic maps, providing users with a clear and intuitive representation of their travel options.

### II.F. API for Routing Apps

The system includes an API that enables seamless integration with existing routing and navigation applications. This allows developers to incorporate the system's advanced route optimization capabilities into their applications, enhancing the user experience and providing more accurate travel recommendations.

### III. Functionality

### III.A. Data Input

Users input their personal data, including age, sex, weight, height, physical condition, and health attributes, into the system. They also select the type of activity, such as walking or cycling, that they intend to undertake. This data is used to tailor route calculations to the user's specific needs.

### III.B. Route Calculation

[The system calculates the physiological effort required for different routes by converting metabolic equivalencies into distance-based equivalents. It adjusts these calculations based on individual user profiles and terrain factors, ensuring that the routes recommended reflect the true effort required.

### III.C. Visualization

The results of the route calculations are visualized on a map, showing areas of equivalent effort and optimal routes based on user-specific data. This visualization provides users with a clear and intuitive understanding of their travel options, helping them make informed decisions about their routes.

### III.D. Analytics

The system provides analytics on exertion levels for different routes, which can be used by urban planners, public health officials, and mobility service providers. These analytics offer valuable insights into the physiological demands of various routes, supporting more effective planning and decision making.

### IV. Applications

### IV.A. Routing Optimization

The system enhances existing navigation apps by providing routes optimized for physiological effort. This allows users to choose routes that match their fitness levels and preferences, improving their overall travel experience.

### IV.B. Urban Planning

Urban planners can use the system to design more accessible and health-promoting environments. By understanding the physiological demands of different routes, planners can create infrastructure that supports active travel and improves public health.

### IV.C. Active Mobility Services

The system optimizes routes for last-mile delivery services, reducing worker fatigue and improving efficiency. By accounting for the physiological effort required for different routes, the system helps delivery services manage their workforce more effectively.

In summary, what is described is
Aspect 1. A system for quantifying physiological effort in spatial analysis, comprising: A database of metabolic equivalencies for various activities; A user profile module configured to collect and store individual user data, including age, sex, weight, height, physical condition, and health attributes; A terrain analysis module configured to analyse terrain gradients and environmental factors; An algorithm engine configured to transform metabolic equivalencies into distance-based equivalents, adjusting for individual user profiles and terrain factors; A Geographic Information System (GIS) integration module configured to visualize and analyse spatial data; An Application Programming Interface (API) designed to integrate the system with existing routing and navigation applications.
Aspect 2. The system of aspect 1, wherein the algorithm engine employs equations such as the Harris-Benedict equation to estimate basal metabolic rate and adjust metabolic equivalencies accordingly.
Aspect 3: The system of aspect 1, wherein the terrain analysis module modifies metabolic equivalencies based on the gradient of the terrain and other environmental factors.
Aspect 4: The system of aspect 1, further comprising a visualization module configured to display areas of equivalent effort and optimal routes on a map.
Aspect 5: The system of aspect 1, wherein the API facilitates integration with active mobility services to optimize routes and reduce worker fatigue.
Aspect 6: A method for quantifying physiological effort in spatial analysis, comprising 1. Collecting individual user data, including age, sex, weight, height, physical condition, and health attributes; 2. Selecting a type of activity from a database of metabolic equivalencies; 3. Analysing terrain gradients and environmental factors; 4. Transforming metabolic equivalencies into distance-based equivalents using an algorithm engine; 5. Visualizing the results on a map using GIS software; 6. Providing analytics on exertion levels for different routes.

### A FURTHER DESCRIPTION

The present disclosure pertains to spatial navigation, spatial analysis, transportation planning, and urban planning. Specifically, it relates to using physiological (bodily) effort as the primary cost function for providing directions and comparing routes or area accessibility levels, taking into account personalized user physiological characteristics as well as environmental and geographical factors.

In conventional route planning, the difficulty or "cost" of a route is typically estimated by travel time or distance. For example, a user enters a starting point and destination into a GPS navigation system, which then guides them along a route and estimates the time or distance required. The same approach can be applied to a series of points (e.g., an accessibility analysis in GIS). However, in some cases, other cost metrics are more useful (US8781730B2)-for instance, the fuel cost for motorized transport.

For physically active modes of travel like walking or cycling (including mixed scenarios with public transit), the intensity of bodily physical activity required (hereinafter *"physiological effort")* is a critical cost factor that influences spatial choices. Existing solutions either ignore this dimension or only partially incorporate it. Some specialized applications (e.g., US20140278064A1, US20120143497A1, WO2019103735A1, US20160330801A1) focus on monitoring or designing exercise programs. They offer features such as estimating energy expenditure (calories) for outdoor exercise routes or classifying route difficulty based on sensor data. However, none of these integrate physiological effort as the core cost function in a prognostic routing system not relying on sensor data flows. They also do not cover everyday activities beyond structured training programs, and they are not sufficiently personalized to individual differences to handle multiple, up to thousands scenarios at once.

Similarly, academic literature provides partial solutions. For example, *"Energy-based pedestrian navigation"* (Virtanen, 2013) describes calculating energy-efficient walking routes by evaluating static factors like ground slope while excluding personal factors. It can estimate how much harder a given slope is to walk compared to flat ground. Nevertheless, focusing on energy alone is misleading as a key cost function, because it cannot account for how routes with similar distance, time, or even energy expenditure can demand vastly different physiological effort from different individuals (e.g., an athletic adolescent versus an overweight middle-aged person of similar body-mass). Moreover, such approaches cannot combine multiple travel modes in one system to handle scenarios with multiple users or multimodal trips. For that reason, instead of energy, a personalized physical activity intensity metric is more suitable.

In exercise science, physical activity intensity is often represented by metabolic equivalents of task (METs). A MET quantifies activity intensity by the ratio of the metabolic rate during the activity to a reference resting metabolic rate (with 1 MET ≈ 3.5 ml O₂/kg/min under resting conditions; see DOI: 10.1016/j.jshs.2023.10.010), yielding a proportional index. METs are linked to energy expenditure and can be used as an intermediate tool for energy calculation (as in CN117232542A), but they are a distinct measure of intensity. Furthermore, adjusting MET values based on individual physiological characteristics provides highly accurate estimates, as confirmed by recent experimental studies (DOI: 10.1152/japplphysiol.00023.2004).

In summary, the current state of the art provides only partial solutions for evaluating routes based on distance, time, money, or energy expenditure-focusing mainly on external spatial parameters. Scientific methods exist to express physical activity intensity via METs and allow personalization, suggesting a potential intrinsic "cost" of locomotion. However, no known method uses physiological effort as the key cost function for routes across different scenarios, modes of transportation, or users. This leaves significant gaps in navigation systems, public transport accessibility analysis, and infrastructure planning. A solution addressing these gaps would enable a truly human-centric active travel system by providing personalized physiological effort estimations to optimize routes. It would also introduce a standardized measure to compare routes across different users and multimodal scenarios.

**The present invention** provides a computer-implemented method and system for calculating the "cost" of traveling a route in terms of personalized physiological effort. It obtains physiological data (from the user or external sources) necessary to determine the user's basal/resting metabolic rate, along with relevant geographical and environmental parameters. Using these inputs, the system applies a novel bioenergetic cost function to one or more segments of a route.

The cost is expressed as a new index or metric, referred to here as Metabolically Equivalent Distance (MED). This measure can be standardized against the physiological effort required for a reference user to traverse a reference route under reference conditions. Such standardization allows routes to be ranked by the minimum or preferred physiological effort across one or multiple users. It also supports the creation, execution, and visualization of spatial accessibility analyses across many individuals.

To implement the method, the invention comprises a system with the following modules: a User Profile Module for inputting and storing user physiological data, a Metabolic Rate Database of MET values and adjustment factors, a Terrain Analysis Module for obtaining spatial and environmental data, a Calculation Engine, a storage medium or memory, and an Output Interface for presenting and exporting results.

### Main advantages of the invention include:

- Personalized estimations: Route "cost" calculations account for individual physiological differences (e.g. fitness level, body characteristics).
- Standardized effort measure: Physiological effort is normalized into a comparable unit (MED), independent of a person's body mass, fitness, or mode of travel.
- Dynamic adjustability: Calculations can adjust in real time based on changing conditions (speed, mode of transport, weather, etc.).
- Seamless integration: The system can integrate with existing technologies (navigation services, GIS applications, wearable devices) via its API, enhancing those platforms with physiological effort-based metrics.

Figure 1 (attached) illustrates the system architecture and its basic modules. The following detailed description provides an exemplary implementation with the necessary calculations, without limiting the scope of the invention to these examples.

### Detailed Description of Basic System Units

### User Profile Module (Fig. 1-101)

The User Profile Module (UPM) collects, stores, and manages data for each user, such as demographic data (e.g., age, gender), anthropometric measurements (e.g., weight, height), while an "advanced settings" subsystem allows the input of additional parameters such as the presence of medical conditions, the percentage of body fat, the presence of additional load (expressed in kg), or the user's fitness level. Additionally, the UPM can record historical information for each user, such as usual walking or cycling speeds, as well as receive user feedback on perceived exertion. It supports interfacing with third-party systems (e.g., "wellness" software) for the direct import of external data, as well as with wearable devices and sensors (e.g., heart rate monitors, GPS). Finally, it implements security protocols and anonymization techniques for personal data according to the applicable specifications.

### Metabolic Rate Database (MRD) (Fig. 1-102)

The Metabolic Rate Database (MRD) is a central data repository that includes standardized metabolic rate values for aerobic physical activities. The values are drawn from reliable sources in scientific literature, such as the systematically coded metabolic equivalents (METs) described in the document DOI: 10.1016/j.jshs.2023.10.010, which contains hundreds of cases. These range from complete inactivity, driving a car, or being a passenger, to walking at various speeds and ground slopes, cycling, running, and ascending or descending stairs. In addition, the data can be enriched and drawn directly from empirical field studies (ergospirometry), which, in any case, feed the values of the above or similar lists. Furthermore, the MRD includes continuous or categorical variables (specific adjustment factors for extreme ground slopes, ambient temperature, wind conditions (speed and direction), and surface type (e.g., asphalt, gravel, dirt)) to improve accuracy where relevant data are available. In cases where there is a lack of specific bibliographic values (e.g., intermediate cycling speeds), the MRD generates estimates through standard interpolation functions between known values (e.g., splines) or resorts to predetermined reference values. Overall, the MRD provides the Calculation Engine with necessary values for the personalization of calculations.

### Terrain Analysis Module (TAM) (Fig. 1-103)

The Terrain Analysis Module (TAM) feeds the system with spatial and environmental data, interfacing with external sources through application programming interfaces (APIs). It retrieves digital elevation models (DEMs) for calculating slopes and classifications of surface types (e.g., from Google Maps, Google, or OpenStreetMap). Additionally, it can incorporate real-time data from meteorological data providers, such as temperature, wind speed and direction, as well as the presence and intensity of precipitation. Ultimately, the TAM provides the Calculation Engine with values for performing the calculations of a route.

### Calculation Engine (CE) (Fig. 1-104)

The Calculation Engine (CE) is the computational core of the system. Initially, the route is divided into one or more segments, taking into account changes in transportation modes or using minimum units (e.g., segments of 50 meters) based on the calculations of the TAM. For each segment, a bioenergetic function is applied that combines the user's physiological data retrieved from the UPM with the geospatial data provided by the TAM. This combination produces a MED (Metabolically Equivalent Distance) value for each segment, which can be weighted against a reference user and a reference distance for standardization purposes. Subsequently, the individual values are summed to calculate the total cost of one or more routes. Based on the cost in MED, routing instructions are generated based on standard (or other) routing algorithms (e.g., Dijkstra, A*, Floyd-Warshall). Finally, the CE supports dynamic recalculation, taking into account changing parameters such as travel speed, modes of transportation, or prevailing weather conditions, utilizing external data sources or sensors.

### Output Interface (Fig. 1-105)

The Output Interface undertakes the export and presentation of the results produced by the CE

(104). It provides personalized routing instructions, which include information about the proposed route, the estimated cost of physical activity intensity, and alternative routes with their corresponding costs in MED (106). Integration with GIS technology allows for the rendering and analysis of results on digital maps (107), facilitating the comprehensible presentation and comparative analysis of routes between one or different users. The system displays the calculated estimates color-coded or with labels that numerically indicate the total MED value, expressed in MEDmeter units or other equivalent measures (e.g., MEDfeet). Additionally, it displays isopleths of accessibility, presenting outlines of equal-effort accessibility areas in the form of polygons, or with color gradients, creating heat maps or choropleth maps when analyzing sets of points of interest. Finally, the module provides local and web interfaces. Through the provision of an API (108), the invention significantly extends its functionalities, integrating them into broader ecosystems and technological solutions for routing, mapping, and spatial data processing, such as GPS navigation applications or GIS spatial analysis.

### Examples of Hardware Implementation

The system can be implemented on various hardware setups, including smartphones, wearable devices, dedicated GPS navigation units, or server-based and cloud computing platforms. In a local (device-based) implementation, the hardware includes at least one processor for running calculations, sufficient RAM, storage for data and software, and a power source (e.g. a rechargeable battery). The device also incorporates sensor interfaces such as a GPS receiver, and communication interfaces (Wi-Fi, cellular data, Bluetooth/ANT+) to access online resources and connect with external sensors. A user interface (physical buttons or touchscreen) is used for input and output. For large-scale deployments handling high data volumes (e.g., city-wide traffic or user data), specialized database servers and cloud computing resources are recommended to ensure performance and scalability.

### Exemplary Method Calculations and Standardization

The method uses a series of calculations to determine a personalized and relative physical exertion value during a route. In a typical implementation, the basic calculations include the following steps:
1. Calculation of Individual Basal Metabolic Rate (BMR individual):
   The individual Basal Metabolic Rate (BMR) or, alternatively, the Resting Metabolic Rate (RMR) is calculated using the Harris-Benedict equation or other valid equations, such as the revised versions of Harris-Benedict, the Mifflin-St Jeor equation, or other equations based on different parameters or adapted to specific populations.

The appropriate equation is selected automatically by the system and can be adjusted by the user via a relevant option in the "Advanced Settings" of the MPH. The equation is applied separately for men (BMR male) and women (BMR female) for accuracy reasons and is then converted to values compatible with metabolic equivalencies.

### Mathematical Formulas (Examples)

### Harris-Benedict:

- 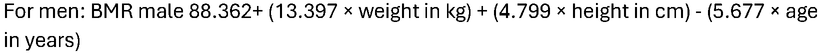 For men: BMR male 88.362+ (13.397 × weight in kg) + (4.799 × height in cm) - (5.677 × age in years)
- 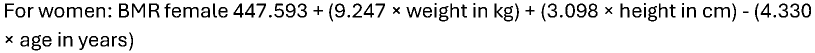 For women: BMR female 447.593 + (9.247 × weight in kg) + (3.098 × height in cm) - (4.330 × age in years)

### Mifflin-St Jeor:

- 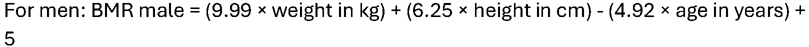 For men: BMR male = (9.99 × weight in kg) + (6.25 × height in cm) - (4.92 × age in years) + 5
- 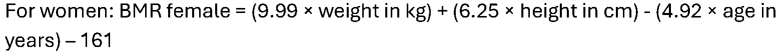 For women: BMR female = (9.99 × weight in kg) + (6.25 × height in cm) - (4.92 × age in years) - 161

In order to adjust the metabolic equivalent values based on the user's individual BMR, the calculated BMR or RMR value (expressed in kcal/day) is converted to an equivalent oxygen consumption value, expressed in ml.kg⁻¹.min⁻¹, based on the following conversions: $Kcal . {day}^{- 1} / 1440 = kcal . {minute}^{- 1}$ $kcal {minute}^{- 1} / 5 = L . {minute}^{- 1}$ $L . {minute}^{- 1} / \left(weight in kg\right) \times 1000 = mi . {kg}^{- 1} . {minute}^{- 1}$

Where, Kcal.day⁻¹ is the user's individual BMR, 1440 is the number of minutes in a day, the number 5 represents the energy equivalent of consuming 1 liter of oxygen (approximately 5 kcal), weight in kg is the person's weight in kilograms, 1000 is a conversion factor from liters to milliliters (ml).
2. Calculation of Reference Basal Metabolic Rate (BMRreference):
To define a reference value, the BMR or RMR of a reference user is used. The reference user has standard parameters close to the demographic and anthropometric median of European countries, such as 80 kg weight, 1.75 m height, 35 years of age for men, and 65 kg weight, 1.65 m height, 35 years of age for women, to which the same equations as in step 1 are applied. This reference BMR (or RMR) serves as a point of comparison for all users of the system.

In a typical implementation, calculating the Metabolically Equivalent Distance (MED) for a given route follows these steps:

### 3. Extraction, Correction and Adaptation of Metabolic Rate:

**Extraction of Standard MET Values:** For each activity type involved (e.g., walking, cycling), retrieve a standard MET value from the MRD corresponding to a reference speed for that activity. If only raw metabolic rates are available (in ml O₂/kg/min from empirical studies), convert them to METs by dividing by the standard resting oxygen consumption (3.5 ml O₂/kg/min ≈ 1 MET).

**Correction for Individual BMR:** Adjust the standard MET to account for the individual's resting metabolism (BMR). Specifically, multiply the standard MET by the ratio of 3.5 ml O₂/kg/min to the user's actual BMR (in the same units). This yields the **Corrected MET** for the user. (Similarly, compute a **Reference Corrected MET for** a reference user using the reference user's BMR.) $Corrected MET = Standard MET \times \left(3.5/BMR_individual\right)$

**Application of Fitness Correction Factor (F):** Optionally adjust the Corrected MET by a fitness factor *F* that reflects individual differences in body composition, cardiovascular fitness, and overall conditioning. This factor can be derived from the user's profile data, estimated from user feedback (e.g., perceived exertion), or set manually. The result is a fitness-adjusted MET. $Adjusted MET _ F = Corrected MET \times F$

**Adjustment for Environmental and Contextual Factors:** Refine the fitness-adjusted MET to account for terrain and environmental influences. Apply adjustment coefficients for each relevant factor:
- **K_slope:** slope or gradient of the route segment
- **K_surface:** surface type (e.g., asphalt, gravel, trail)
- **K_weather:** meteorological conditions (e.g., headwind, temperature extremes)
- **K_load:** additional carried load (if applicable)

Multiply the fitness-adjusted MET by the sum of these factors (plus 1) to get the **Adjusted MET** for the segment. $Adjusted MET = Adjusted MET _ F \times \left(1+K_slope+K_surface+K_weather+K_load\right)$

**4. Relative Intensity Ratio (R):** Compute the dimensionless relative intensity ratio R as the Adjusted MET divided by the Reference Corrected MET. This ratio represents the user's effort intensity relative to the reference scenario. $R = Adjusted MET / Reference Corrected MET$

**5. MED Calculation (per Segment and Total):** For each route segment, calculate the MED contribution by multiplying R by the physical distance of that segment (in meters): $MED _ segment = R \times distance _ segment$

Sum the MED values of all segments to obtain the total MED for the entire route: $MED _ total = Σ \left(MED_segment\right)$

The resulting MED is expressed as a distance unit (e.g., in "MEDmeters"), allowing intuitive interpretation and comparison of effort across users and scenarios. On this universal scale, a route costing 500 MED-m imposes the same effort on everyone. In physical distance, this equals 500 m walking for the reference profile but ~1,500 m cycling; across profiles, it may correspond to ~300 m walking for an older obese adult or ~800 m for an athletic teenager.

**Handling Segments Without Physical Distance:** If a segment involves no actual locomotion (for example, waiting at a bus stop), the system still assigns a standard MET value from the MRD for the activity (e.g., standing, sitting). This MET is then corrected and adjusted as described in steps 2-4. Because no distance is physically covered, the effort is translated into an equivalent distance that the reference user would have covered in the same time. The system uses a reference distance per minute (D_ref) that a reference user covers at a baseline pace (for example, 80 meters per minute, corresponding to walking about 4.8 km/h). The MED for a time-based segment is then calculated as: $MED _ segment = R \times \left(D_ref\times time_minutes\right)$

Where *R* is the relative intensity ratio for the activity, *D_ref* is the calibration distance the reference user covers per minute at baseline, and *time_minutes* is the duration of the segment (in minutes). If desired, such non-locomotion segments can be omitted from the total MED calculation or accounted for separately (as a supplemental effort metric).

### Illustrative Example 1: Uphill Walking

A steep uphill route of 1,000 meters is traversed on foot by an overweight middle-aged user. After applying the above steps, the system calculates a total MED of 2,000 MEDmeters. This means the actual physiological effort required for this user is equivalent to the reference user walking twice the physical distance under baseline conditions.

### Illustrative Example 2: Multimodal Travel

Consider a trip composed of 200 meters of walking, 10 minutes standing while waiting, 10 minutes traveling as a passive passenger on public transport, followed by another 200 meters of walking. Each segment is assigned the appropriate Standard MET, corrected for the user's BMR and fitness factor, and adjusted for terrain and context. The MED values of the individual segments are summed to yield the total MED for the trip. This enables direct comparison between multimodal journeys and purely active ones, providing a standardized view of total effort expenditure.

### Illustrative Example 3: Multi-User, Multimodal Optimization (Robotaxi Pickup Scenario)

A fleet management system aims to optimize pickup points for several users. Three passengers request rides simultaneously: one young athletic user, one middle-aged commuter, and one elderly user with limited mobility. The system calculates the MED cost for each potential pickup location by integrating walking segments for each user with vehicle routing constraints for the robotaxis. By comparing the total MED across all users, the system selects a pickup location that minimizes the aggregate physiological effort while balancing vehicle efficiency. This allows the robotaxi to serve all users fairly, ensuring that no individual is disproportionately burdened by high walking effort.

### System Functionality

The process begins with the registration (or retrieval) of user personal data through a user-friendly interface or a profile creation wizard (101). The UPM provides the ability to enter more specialized information or select different bioenergetic equations in the "Advanced Settings" menu. Subsequently, the user can define a destination or request the calculation of an accessibility zone based on iso-effort limits. They can select the desired mode of transportation or activity (e.g., walking, cycling, using public transportation), having the option to define desired levels of physical activity intensity (e.g., minimizing MED, optimizing the MED-time ratio), or avoiding areas of high local intensity (e.g., steep uphill routes).

The system displays on the user's screen numerical MED values for each route or route segment, along with distance and time information (106). It also supports the comparative visualization of multiple routes, displaying them simultaneously on the map with distinct lines (107). In one possible implementation, the main suggested routes are distinguished by solid lines, while alternative options are shown with dashed lines. Similarly, it can generate dynamically produced polygon outlines of "iso-effort" routes and/or with color coding, if configured. Once the estimates are calculated, the user has the option to review and confirm the suggested routes or request new ones.

In addition to calculating and exporting routes on a map, the system has a subsystem for data export and analysis. At the user level, it provides detailed analysis of route history with descriptive statistics. At the population level, data from multiple users are aggregated and visualized on heat maps or choropleth maps, providing information for applications such as urban planning analyses, real estate analyses, and infrastructure design. The subsystem supports data export in common file formats (such as CSV, GeoJSON, Shapefile) autonomously or via the API (108).

Finally, the system has continuous improvement capabilities, providing a provision for a feedback mechanism through which the user can record at the end of the route their subjective assessment (perceived effort) on a scale of 1 to 10, which simulates the Borg scale (Borg, G. A., 1982). These data can be used for further personalization and optimization of the estimates.

### Applications

The invention finds application in various fields where routing or analysis of spatial routes with physically active modes of travel plays a significant role. Furthermore, the introduction and normalization of a new measure that links physiological effort with spatial dimensions generates unexpected benefits in applications where the ability to compare different individuals, routes, and modes of transportation is useful.

The method of the invention complements existing systems for GPS navigation applications, improving their accuracy in estimating the "cost" for active travel and enabling the creation of personalized recommendations and analyses, or the suggestion of alternative route options, each optimized for different objectives such as minimum physical effort, balanced effort distribution across a multitude of individuals, or achieving a predetermined exercise intensity.

### Example 1: Uphill Walking

A steep uphill route of 1,000 meters is traversed on foot by an overweight middle-aged individual. After applying the above calculations, the system outputs a total of **2,000 MEDmeters** for this route. In other words, the physiological effort required for this user is equivalent to the reference user walking **twice** the distance on flat terrain under baseline conditions.

### Illustrative Example 2: Multimodal Travel

Consider a trip composed of 200 meters of walking, 10 minutes of standing (waiting),
10 minutes of riding as a passive passenger on public transport, followed by another 200 meters of walking. The system assigns each segment an appropriate standard MET, corrects it for the user's BMR and fitness factor, and adjusts for terrain and context. The MED contributions of all segments are then summed to yield the total MED for the trip. This unified measure enables direct comparison between a multimodal journey and a purely active journey, providing a standardized view of the total effort expenditure.

### System Functionality

The process begins with the user creating a profile (or retrieving an existing profile) via a user-friendly interface (corresponding to the UPM in Fig. 1-101). The UPM allows entry of detailed personal data and, in advanced settings, selection of different bioenergetic equation models if desired. Once the profile is set up, the user can input a destination or request an iso-effort accessibility zone (an area reachable within a given effort threshold). The user also selects the mode of travel (e.g., walking, cycling, public transport) and may specify routing preferences such as minimizing MED, optimizing the MED-to-time ratio, or avoiding high-intensity segments (for example, steep uphill sections).

After processing the request, the system displays on the user's screen the calculated MED values for the proposed route (and optionally for each segment), alongside the traditional distance and time estimates (Fig. 1-106). It also supports comparing multiple routes by displaying them simultaneously on a map with distinct visual styles (Fig. 1-107). For instance, the primary suggested route might appear as a solid line, while alternatives are shown as dashed lines. The interface can additionally generate iso-effort contours (polygons delineating equal-effort areas) and apply color-coding or heatmap gradients if configured. Once the routes are presented, the user can review and choose one of the suggestions or adjust preferences and request a new calculation.

Beyond individual route guidance, the system includes a data analysis subsystem for broader insights. At the **user level,** it maintains a history of routes and provides statistics (e.g. total MED per day, average intensity) for personal use. At the **population level,** data from multiple users (with identifying information removed) can be aggregated and visualized as heat maps or choropleth maps. This reveals spatial patterns of physical effort and accessibility, offering valuable information for applications such as urban planning, real estate market analysis, or infrastructure design. The subsystem can export these analytical datasets in common formats (CSV, GeoJSON, Shapefile), either on-demand or via the API (Fig. 1-108) for integration with external analysis tools.

The system also features a feedback mechanism for continuous improvement. After completing a route, the user can record a subjective effort rating on a scale (for example, 1-10, similar to the Borg perceived exertion scale (Borg, 1982)). This feedback is fed into the user's profile and can be used to further personalize and calibrate future effort estimations.

### Applications

This invention can be applied in a wide range of fields where active travel and route planning are relevant. The introduction of a normalized measure linking physiological effort with spatial distance also enables meaningful comparisons across different individuals, routes, and modes of transportation. **Key application areas include:**
- **GPS Navigation and Routing Services:** Enhancing existing navigation platforms (e.g. smartphone map applications or GPS devices) by improving the accuracy of "cost" estimates for walking, cycling, and other active travel. The system enables personalized route recommendations and alternative options optimized for various objectives such as minimum physical effort, balanced effort distribution among multiple users, or achieving a target exercise intensity.
- **Personal Health and Fitness:** Serving as a tool (or API plugin) for wellness and fitness applications. The physiological effort metric can be used to plan routes that align with individual fitness goals or exercise programs. For example, a user could choose a route that meets a desired exercise intensity or calorie-burning target. The system effectively bridges navigation with fitness training by providing calibrated exercise metrics for everyday travel.
- **Urban Planning and Public Transportation:** Providing urban planners and transportation engineers with advanced spatial analysis capabilities. The system can generate accessibility maps showing areas reachable within certain effort levels for different demographic groups (e.g., by age or fitness level). It can identify neighborhoods with low active accessibility or high "effort barriers" (such as hilly terrain). Additionally, it offers more accurate estimates of the service areas of public transportation stops when considering the effort required to reach them on foot or by bicycle, aiding in transit planning and infrastructure development.
- **Real Estate Analysis:** Informing real estate developers and investors about the active accessibility of locations. Using the system, one can estimate the service area (catchment area) of amenities like parks, schools, or shops in terms of equal effort rather than just distance. Comparisons of different sites can reveal which locations are more accessible for various user groups (e.g., seniors, cyclists), adding a new dimension to property value assessment and urban livability studies.
- **Delivery and Logistics Services:** Optimizing routes and workload distribution for services that rely on human-powered travel, such as bicycle couriers or on-foot delivery personnel. By accounting for each worker's physical capacity and any carried load, the system can assign routes in a way that equalizes physiological effort among workers. This leads to more efficient delivery times and helps manage fatigue, ultimately improving both productivity and worker well-being.
- **Shared and Multimodal Mobility (e.g., Robotaxi Pickup Optimization):** Enabling fleet operators, ride-hailing platforms, or shared micromobility systems to minimize aggregate physiological effort when determining pickup or transfer points for multiple simultaneously. The system evaluates potential pickup locations by calculating the MED cost for each passenger (considering walking distance to pick up, fitness, and environmental conditions). The system then selects a location that balances overall user effort with vehicle routing efficiency, ensuring no individual is disproportionately burdened.

In summary, the above can be described as
Aspect 1. A computer-implementable method for providing personalized estimates of physical effort and generating routing instructions for spatial navigation, comprising the following steps
   a. Obtaining or entering a user's physiological data.
   b. Accessing a database containing standard metabolic equivalent values for various physical activities.
   c. Calculating a personalized physical effort intensity cost for a route or route segment by adjusting the metabolic equivalence values to the user's physiological characteristics.
   d. Creation of routing instructions, taking into account the calculated personalized physical activity intensity cost.
   e. Provision of routing instructions to a user or external system.
Aspect 2. The method according to 1, characterized in that the personalized physical activity intensity cost is expressed in Metabolic Equivalent of Distance (MED) units, taking into account the user's basal metabolic rate or resting metabolic rate, with one MED unit corresponding to the physical effort required by the user to cover a distance, expressed as a multiple of the physical effort that a reference user would expend to cover the same distance under reference conditions.
Aspect 3. The method according to one of aspects 1 to 2, characterized in that it comprises adjusting the personalized values obtained in step c of claim 1 based on geographical or environmental data or additional load when calculating the individualized physical activity intensity cost.
Aspect 4. The method according to one of aspects 1 to 3, characterized in that the routing instructions provided include at least one of the following:
   a. Proposal of an optimized route to minimize physical activity intensity.
   b. Delineation of an accessibility zone based on required equivalent physical activity intensity.
   c. Visual representation of physical activity intensity levels and/or accessibility zones on maps.
Aspect 5. The method according to one of aspects 1 to 4, characterized in that it further comprises managing multiple user profiles and calculating comparative personalized physical effort costs for each of the profiles on one or more common routes.
Aspect 6. The method according to aspect 1, characterized in that it further comprises:
   a. The calculation of zones of equal physical effort around a point of interest or multiple points,
   b. The production of a corresponding geographic layer that depicts these zones on a map,
   c. The dynamic readjustment of the zones in case the user or environment parameters change.
Aspect 7. System for providing personalized estimates of physical effort and creating routing instructions, which includes:
   a. User physiology data management unit.
   b. Database with standardized metabolic equivalence values for multiple physical activities.
   c. Computing unit configured to calculate the personalized physical activity intensity cost for at least one route or route segment, by correcting the standard metabolic equivalents to the user's physiological data, which produces estimates of the cost of a route based on the above personalized cost.
   d. An information provision interface, which makes routing information available to a user or an external system.
Aspect 8. The system according to aspect 7, characterized in that it is further configured to include:
   a. A unit for analyzing geographic and environmental data related to the route.
   b. Software or commands integrated into the computing unit of claim 7, configured to adjust the personalized metabolic intensity values based on the geographic and/or environmental data to calculate the personalized physical activity intensity cost.
Aspect 9. The system according to aspects 7 or 8, characterized in that the information provision interface is configured to generate at least one of the following:
   1. A color-coded map depicting physical activity intensity levels for possible routes.
   2. A graphical representation of an accessibility zone based on equivalent physical activity intensity.
   3. A comparative view of multiple routes with their respective personalized physical activity intensity costs.
Aspect 10. A non-volatile computer-readable storage medium containing instructions which, when executed by a processor, enable the methods of claims 1 to 6 to be implemented

### List of Reference Numerals

101 - User Profile Module (UPM)
102 - Metabolic Rate Database (MRD)
103 - Terrain Analysis Module (TAM)
104 - Calculation Engine (CE)
105 - Output Interface
106 - Routing Instructions
107 - GIS Visualization Layer
108 - External API Integration

### Abreviations

- BMR: Basal Metabolic Rate
- MED: Metabolically Equivalent Distance
- MET: Metabolic Equivalents of Task
- MRD: Metabolic Rate Database 102
- TAM: Terrain Analysis Module 103

## Claims

1. A computer-implemented method for calculating physiological effort-based routes, the method comprising:
- obtaining user physiological data including at least one parameter selected from age, sex, weight, height, fitness level, and basal metabolic rate,
- retrieving metabolic equivalent of task (MET) values from a metabolic rate database (102), wherein the MET values correspond to different physical activities,
- obtaining geographical and environmental data for a route including at least one parameter selected from distance, terrain slope, surface type, and weather conditions,
- calculating a metabolically equivalent distance (MED) value for the route by applying a bioenergetic cost function that combines the user physiological data, the MET values, and the geographical and environmental data; and
- outputting routing information based on the calculated MED value.

2. The method of claim 1, further comprising:
- dividing the route into a plurality of segments,
- calculating individual MED values for each segment of the plurality of segments,
- summing the individual MED values to obtain the MED value for the route.

3. The method of claim 1 or 2, further comprising correcting the MET values based on a user's basal metabolic rate by multiplying a standard MET value by a ratio of a reference metabolic rate to the user's actual basal metabolic rate.

4. The method of claims 1 to 3, further comprising applying adjustment factors to the corrected MET values based on environmental conditions, wherein the adjustment factors include coefficients for at least one of slope, surface type, weather conditions, and carried load.

5. The method of claims 1 to 4, further comprising calculating a relative intensity ratio by dividing an adjusted MET value by a reference corrected MET value for a reference user; and multiplying the relative intensity ratio by a physical distance to determine the MED value.

6. The method of any of claims 1 to 5, further comprising:
- generating accessibility zones by calculating MED values for a plurality of destinations from a starting point; and
- identifying areas reachable within a specified MED threshold.

7. The method of any of claims 1 to 6, further comprising:
- receiving user feedback regarding perceived exertion after route completion; and
- adjusting future MED calculations based on the user feedback.

8. The method of any of claims 1 to 7, wherein the route comprises multimodal travel segments including at least two different transportation modes.

9. The method of any of claims 1 to 8, further comprising applying a fitness factor to adjust the MET values based on individual conditioning differences including at least one of cardiovascular fitness, body composition, and overall physical conditioning.

10. The method of any of claims 1 to 9, further comprising performing real-time recalculation of the MED value based on changing parameters including at least one of travel speed, transportation mode, and prevailing weather conditions.

11. The method of any of claims 1 to 10, further comprising optimizing pickup locations for a plurality of users by calculating aggregate MED costs for each potential location and selecting a location that minimizes total physiological effort across the plurality of users.

12. The method of any of claims 1 to 11, further comprising generating a visualization of the routing information on a digital map with color-coding or numerical labels indicating the MED value to guide the user.

13. A computer program comprising instructions which, when executed by a computer, cause the computer to carry out the method of any of claims 1 to 12.

14. A computer-readable medium comprising instructions which, when executed by a computer, cause the computer to carry out the method of any of claims 1 to 12.

15. A computer system for calculating physiological effort-based routes, the system comprising:
- a user profile module (101) configured to collect and store user physiological data,
- a metabolic rate database (102) containing standardized MET values,
- a terrain analysis module (103) configured to retrieve geographical and environmental data,
- a calculation engine (104) configured to process the user physiological data, the MET values, and the geographical and environmental data to calculate MED values using a bioenergetic cost function; and
- an output interface (105) configured to present routing information based on the calculated MED values.
